# DEMANDE DE BREVET EUROPEEN

(11) **EP 4 545 363 A1**
(43) Date de publication de la demande: **30.04.2025**
(21) Numéro de dépôt: 24202034.5
(22) Date de dépôt: 23.09.2024
(51) Int. Cl.: B60R 19/24, B62D 25/16

(54) **PRESSEUR DE PARE-CHOCS DE VÉHICULE AUTOMOBILE COMPRENANT UNE EXTENSION LATÉRALE DE RENFORCEMENT**

(30) Priorité: 23.10.2023 FR 2311473
(71) Demandeur: Stellantis Auto SAS, 78300 Poissy (FR)
(72) Inventeur: BOUDAN, JULIEN, 91210 DRAVEIL (FR); PERON, RODOLPHE, 95220 HERBLAY (FR)
(74) Mandataire: BCIP

(57) **Abrégé**

La présente invention concerne un pare-chocs pour véhicule automobile (2), comprenant :
- une paroi de pare-chocs (4) se terminant à deux extrémités opposées par deux crosses (4.1) destinées à épouser deux coins avant ou arrière du véhicule automobile et à se raccorder à la carrosserie (6) dudit véhicule automobile ;
- un presseur coulissant (8) disposé sur une face intérieure (4.5) d'un bord de raccordement (4.2) de chacune des deux crosses, configuré pour s'engager avec des moyens de fixation de la carrosserie lors d'un montage du pare-chocs sur le véhicule automobile ;
remarquable en ce que le presseur coulissant comprend une portion latérale (12) s'étendant vers l'intérieur du véhicule au-delà du bord de raccordement, de manière à pouvoir prendre appui sur une portion de retour (6.2) de la carrosserie lors du montage du pare-chocs sur le véhicule.

## Description

### Domaine technique

La présente invention concerne le domaine des véhicules automobiles, plus particulièrement le domaine des pare-chocs des véhicules automobiles.

### Technique antérieure

L'assemblage des pare-chocs arrière sur les ailes latérales de la carrosserie des véhicules automobiles est une étape cruciale dans le processus de fabrication automobile. Pour réaliser cette opération, les fabricants utilisent généralement des presseurs, i.e. des équipements spécialement conçus pour fixer solidement les pare-chocs à la carrosserie.

Toutefois, l'utilisation des presseurs n'est pas exempte de problèmes qui peuvent avoir un impact sur la qualité de l'assemblage final ainsi que sur la sécurité des véhicules. En effet, parmi ces problèmes, on peut citer le risque d'affaissement et/ou de déformation des crosses latérales de la peau du pare-chocs attachée au presseur correspondant, qui découlent souvent des efforts exercés par les techniciens de montage pendant des ajustements de position des presseurs.

Ces ajustements peuvent entraîner des non-conformités ou des dommages structurels, avec des conséquences potentielles sur la sécurité à long-terme des véhicules automobiles, par exemple, les pare-chocs arrière peuvent se détacher plus facilement en cas de collision et ne plus offrir la protection nécessaire aux occupants du véhicule automobile ou aux piétons.

Il existe alors un besoin chez les constructeurs automobiles d'optimiser les procédures d'assemblage des pare-chocs afin de minimiser les problèmes mentionnés précédemment et de garantir la qualité et la sécurité des véhicules automobiles qu'ils produisent.

### Exposé de l'invention

La présente invention a pour objectif de pallier au moins un des inconvénients de l'état de la technique susmentionné. Plus particulièrement, l'invention a pour objectif de proposer une solution simple, performante et économique permettant de garantir une bonne qualité des assemblages des pare-chocs sur la carrosserie des véhicules automobiles.

À cet effet, l'invention a pour objet un pare-chocs pour véhicule automobile, comprenant :
- une paroi de pare-chocs s'étendant suivant une direction principale et se terminant à deux extrémités opposées par deux crosses destinées à épouser deux coins avant ou arrière du véhicule automobile et à se raccorder à la carrosserie dudit véhicule automobile ;
- un presseur coulissant disposé sur une face intérieure d'un bord de raccordement de chacune des deux crosses, configuré pour s'engager avec des moyens de fixation de la carrosserie lors d'un montage du pare-chocs sur le véhicule automobile ;
remarquable en ce que le presseur coulissant comprend une portion latérale s'étendant vers l'intérieur du véhicule au-delà du bord de raccordement, de manière à pouvoir prendre appui sur une portion de retour de la carrosserie lors du montage du pare-chocs sur le véhicule.

Selon un mode de réalisation, le presseur coulissant comprenant au moins un clip de maintien configuré pour être engagé par coulissement dudit presseur le long de la face intérieure du bord de raccordement correspondant, jusqu'à un engagement dudit au moins un clip de maintien avec un trou correspondant sur ledit bord de raccordement.

Selon un mode de réalisation, la portion latérale comprend une nervure latérale affleurant une face arrière du presseur coulissant, ladite nervure latérale formant une base à partir de laquelle une paroi d'extension s'étend verticalement et en saillie.

Selon un mode de réalisation, la paroi d'extension comprend une forme en baignoire s'étendant verticalement sur une hauteur correspondant sensiblement à une épaisseur totale du presseur coulissant présentée entre la face arrière et une face avant dudit presseur coulissant en appui contre la face intérieure du bord de raccordement.

Selon un mode de réalisation, la portion latérale comprend au moins une nervure verticale s'étendant verticalement depuis la base et reliant la paroi d'extension à une face latérale du presseur coulissant.

Selon un mode de réalisation, l'au moins une nervure verticale comprend trois nervures parallèles et sensiblement perpendiculaires à la face latérale du presseur coulissant.

Selon un mode de réalisation, la portion latérale comprend une largeur s'étendant au-delà du bord de raccordement d'au moins 15 mm suivant la direction principale de la paroi de pare-chocs.

Selon un mode de réalisation, la portion latérale s'étend sur une longueur correspondant à au moins une moitié d'une étendue longitudinale totale du presseur coulissant.

L'invention concerne également un véhicule automobile comprenant :
- deux ailes latérales de carrosserie comprenant chacune une portion de retour ;
- un pare-chocs comprenant une paroi de pare-chocs formant deux crosses se terminant, chacune, par un bord de raccordement fixé contre la portion de retour de la carrosserie correspondante au moyen de vis et/ou de rivets traversant ladite portion de retour et le bord de raccordement, et s'engageant avec un presseur coulissant disposé contre le bord de raccordement, à l'opposé de la portion de retour de la carrosserie, remarquable en ce que le pare-chocs est selon l'invention.

Selon un mode de réalisation, la portion de retour de la carrosserie comprend une section transversale en L épousant la portion latérale du presseur coulissant.

Les mesures de l'invention sont avantageuses en ce que la portion latérale du presseur coulissant correspond à une extension latérale s'étendant transversalement vers l'intérieur du véhicule automobile de manière à venir prendre appui sur la portion de retour de la carrosserie. Dans cette configuration, les appuis ainsi que les efforts de poussée et de friction générés lors du coulissement du presseur pendant l'assemblage du pare-chocs sont avantageusement répartis de manière homogène sur une plus grande surface de contact, partagée entre le bord de raccordement et la portion de retour de la carrosserie.

Cela permet de maîtriser et de bloquer les rotations locales dudit presseur coulissant pendant l'assemblage, évitant ainsi le risque de torsions et d'apparition de plis sur la paroi de pare-chocs localement.

### Brève description des dessins

[Fig. 1] représente une vue en perspective d'un pare-chocs selon l'invention approchant une carrosserie d'un véhicule automobile pour un assemblage sur ce dernier ;
[Fig. 2] représente une vue en perspective d'un presseur coulissant configuré pour être disposé contre un bord de raccordement de chacune des deux crosses du pare-chocs de la figure 1 ;
[Fig. 3] représente une vue en perspective du bord de raccordement et du presseur coulissant en position normale de montage sur la carrosserie du véhicule automobile ;
[Fig. 4] représente une vue en coupe selon un axe A-A traversant le bord de raccordement et le presseur coulissant de la figure 3, ainsi qu'une portion de retour de la carrosserie.

### Description détaillée

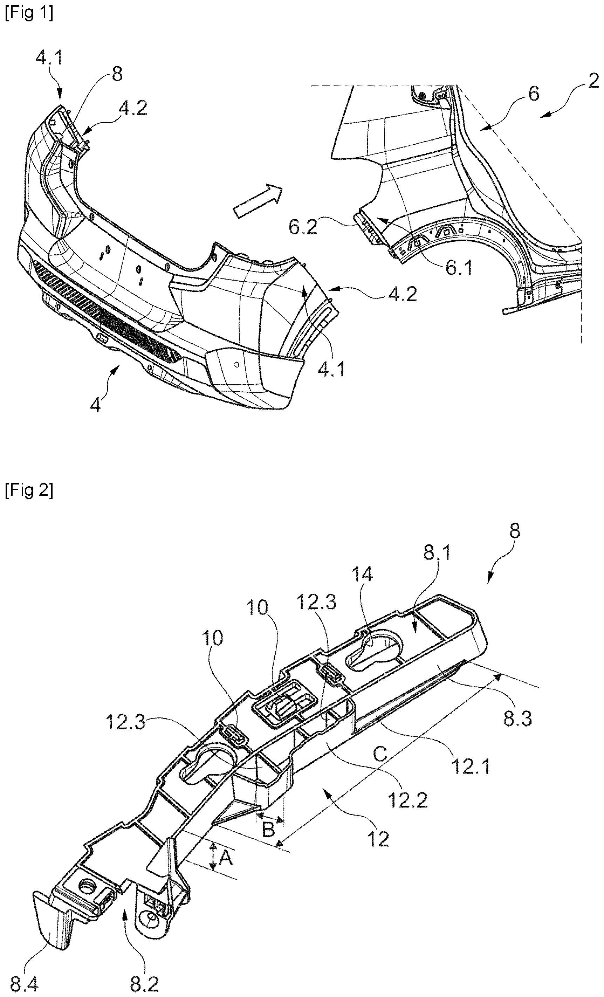

La figure 1 représente une vue en perspective d'un pare-chocs 4 selon l'invention destiné à être manuellement assemblé à une carrosserie 6 d'un véhicule automobile 2, suivant une direction longitudinale dudit véhicule automobile représenté par la flèche illustrée.

Le pare-chocs comprend une paroi de pare-chocs 4 ayant deux crosses 4.1 destinées à épouser deux coins avant ou arrière du véhicule automobile 2. Préférentiellement, les deux crosses 4.1 sont ici configurées pour se raccorder à la carrosserie 6 aux coins arrière dudit véhicule automobile 2.

Un tel montage est avantageusement réalisé par deux presseurs coulissants 8 dont la forme sera détaillée suivant la figure 2.

Les crosses 4.1 se terminent par un bord de raccordement s'étendant suivant une direction principale d'une étendue de la paroi de pare-chocs 4, correspondant à une direction transversale du véhicule automobile 2 en position normale de montage. Le presseur coulissant 8 est disposé en appui contre une face intérieure du bord de raccordement, préalablement à l'assemblage de l'ensemble avec une aile latérale 6.1 correspondante de la carrosserie 6 se terminant préférentiellement par une portion de retour de la carrosserie.

La figure 2, représente une vue en perspective du presseur coulissant 8, ce dernier est désigné par « coulissant » car un mouvement de coulissement dudit presseur intervient lors de l'assemblage du pare-chocs à la carrosserie, de manière à engager au moins un clip de pré-maintien 10, préalablement à une fixation finale de l'ensemble avec des moyens de fixation par vissage et/ou par rivets.

Préférentiellement, le presseur coulissant 8 comprend trois clips de maintien 10 configurés pour être engagés par coulissement dudit presseur 8 le long de la face intérieure du bord de raccordement correspondant (non représenté ici), avec un trou correspondant, disposé au droit du bord de raccordement et sur la portion de retour de la carrosserie.

A cet effet, chaque clip de maintien 10 est apte à se comprimer au contact du bord de raccordement, de manière à être à fleur d'une face avant 8.1 du presseur coulissant 8.

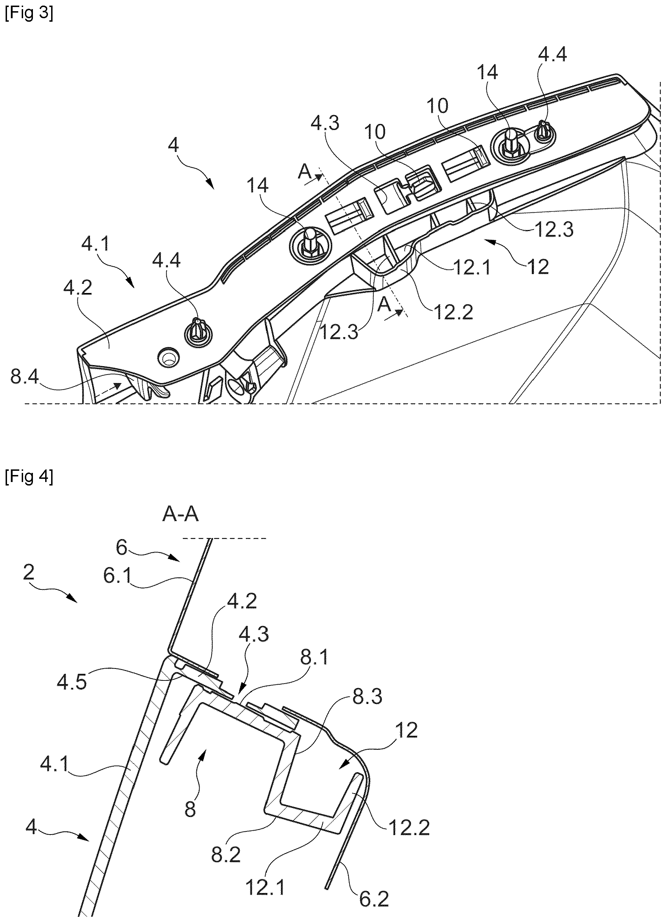

Avantageusement, le presseur coulissant 8 comprend une portion latérale 12 s'étendant vers l'intérieur du véhicule au-delà du bord de raccordement (visible aux figures 3 et 4), de manière à pouvoir prendre appui sur la portion de retour de la carrosserie lors du montage du pare-chocs sur le véhicule.

Les presseurs de l'état de l'art étant dépourvus d'une telle portion latérale, le risque de déformations de la paroi de pare-chocs dues aux efforts de montage est plus élevé, notamment car le presseur repose uniquement sur le bord de raccordement ayant une largeur sensiblement courte qui ne permet pas au presseur de prendre suffisamment d'appuis pour maîtriser et bloquer les rotations locales dudit presseur, engendrant des torsions et des plis de la paroi localement.

Contrairement aux presseurs de l'état de l'art, la portion latérale 12 du presseur coulissant 8 correspond à une extension latérale s'étendant transversalement vers l'intérieur du véhicule automobile. Dans cette configuration, les appuis, ainsi que les efforts de poussées et de friction générés par le technicien de montage lors du coulissement dudit presseur pendant l'assemblage du pare-chocs, sont avantageusement répartis de manière homogène sur une plus grande surface de contact, partagée entre le bord de raccordement d'une part, et la portion de retour de la carrosserie d'autre part.

De préférence, la portion latérale 12 comprend une nervure latérale 12.1 affleurant une face arrière 8.2 du presseur coulissant 8, ladite nervure latérale 12.1 formant une base 12.1 à partir de laquelle une paroi d'extension 12.2 s'étend sensiblement verticalement et en saillie sur une hauteur correspondant préférentiellement à une épaisseur totale A du presseur coulissant 8 présentée entre la face arrière 8.2 et la face avant 8.1.

Dans cette configuration, c'est une extrémité supérieure de la paroi d'extension 12.2 qui est en appui direct contre la portion de retour de la carrosserie lors du montage.

La portion latérale 12 comprend, en outre, une ou plusieurs nervure(s) verticale(s) 12.3 s'étendant verticalement depuis la base 12.1 et reliant la paroi d'extension 12.2 à une face latérale 8.3 du presseur coulissant 8, et comprend plus préférentiellement trois nervures verticales 12.3 parallèles et sensiblement perpendiculaires à la face latérale 8.3.

On peut observer que la paroi d'extension 12.2 comprend une forme en baignoire avec un côté opposé à la face latérale 8.3 affleurant un bord de la nervure latérale 12.1.

De préférence, la portion latérale 12 s'étend sur une longueur C correspondant à au moins une moitié d'une étendue longitudinale totale du presseur coulissant 8, et plus préférentiellement, sur environ 70% de ladite étendue totale. La paroi d'extension 12.2 présente une longueur d'au moins 20% de l'étendue longitudinale totale du presseur coulissant 8.

Avantageusement, les nervures verticales 12.3 permettent d'augmenter la rigidité de la portion latérale 12, ce qui lui permet de résister à d'éventuels contre-efforts pouvant être générés par l'appui de la paroi d'extension 12.2 contre la portion de retour de la carrosserie.

Préférentiellement, la base 12.1 comprend une largeur B s'étendant au-delà du bord de raccordement d'au moins 15 mm suivant la direction principale de la paroi de pare-chocs. Plus préférentiellement, la largeur B est comprise entre 15 mm et 50 mm.

La largeur B peut également être mesurée entre la face latérale 8.3 du presseur 8 et une extrémité latérale de la base 12.1, étant donné que le bord de raccordement s'arrête au niveau de la face latérale 8.3, tel qu'illustré à la figure 3.

En référence à la figure 3, on peut voir que les clips de maintien 10 s'étendent à travers les trous 4.3 correspondants du bord de raccordement 4.2, il s'agit là d'une position normale de montage du pare-chocs 4 et du presseur coulissant 8 sur la carrosserie du véhicule automobile après coulissement dudit presseur 8 par un effort manuel de poussée (illustré par la flèche en pointillés) exercé au niveau de sa portion inférieure 8.4. La portion de retour de la carrosserie est cachée afin de faciliter la lecture de la figure 3.

Avantageusement, le bord de raccordement 4.2 comprend préférentiellement deux pions de centrage 4.4 permettant d'assurer un pré-positionnement de la crosse 4.1 sur l'aile de la carrosserie correspondante, et cela préalablement à la fixation par des rivets 14 avec la carrosserie du véhicule automobile.

La figure 4 représente une vue en coupe selon un axe A-A traversant le bord de raccordement 4.2 et le presseur coulissant 8 de la figure 3, ainsi que la portion de retour de la carrosserie 6.2.

On peut observer que le presseur coulissant 8 est disposé contre la face intérieure 4.5 et la portion latérale 12 dépasse latéralement le bord de raccordement 4.2 pour venir en appui contre la carrosserie 6.

Préférentiellement, la portion de retour de la carrosserie 6.2 comprend une section transversale en L épousant et enveloppant la portion latérale 12 du presseur coulissant 8. Dans cette configuration, la portion latérale 12 représente une zone technique renforcée venant en appui sur la tôle au droit de la portion de retour 6.2, et cela de façon permanente pendant le coulissement et après le montage, afin de garantir un maintien en position du presseur coulissant 8 pour éviter l'affaissement de la paroi de pare-chocs 4 localement.

## Revendications

1. Pare-chocs (4) pour véhicule automobile (2), comprenant :
- une paroi de pare-chocs (4) s'étendant suivant une direction principale et se terminant à deux extrémités opposées par deux crosses (4.1) destinées à épouser deux coins avant ou arrière du véhicule automobile et à se raccorder à la carrosserie (6) dudit véhicule automobile (2) ;
- un presseur coulissant (8) disposé sur une face intérieure (4.5) d'un bord de raccordement (4.2) de chacune des deux crosses (4.1), configuré pour s'engager avec des moyens de fixation (14) de la carrosserie (6) lors d'un montage du pare-chocs (4) sur le véhicule automobile (2) ;
**caractérisé en ce que**
le presseur coulissant (8) comprend une portion latérale (12) s'étendant vers l'intérieur du véhicule au-delà du bord de raccordement (4.2), de manière à pouvoir prendre appui sur une portion de retour (6.2) de la carrosserie (6) lors du montage du pare-chocs (4) sur le véhicule (2).

2. Pare-chocs (4) selon la revendication 1, dans lequel le presseur coulissant (8) comprenant au moins un clip de maintien (10) configuré pour être engagé par coulissement dudit presseur (8) le long de la face intérieure (4.5) du bord de raccordement (4.2) correspondant, jusqu'à un engagement dudit au moins un clip de maintien (10) avec un trou correspondant sur ledit bord de raccordement (4.2).

3. Pare-chocs (4) selon l'une des revendications 1 ou 2, dans lequel la portion latérale (12) comprend une nervure latérale (12.1) affleurant une face arrière (8.2) du presseur coulissant (8), ladite nervure latérale (12.1) formant une base (12.1) à partir de laquelle une paroi d'extension (12.2) s'étend sensiblement verticalement et en saillie.

4. Pare-chocs (4) selon la revendication 3, dans lequel la paroi d'extension (12.2) comprend une forme en baignoire s'étendant verticalement sur une hauteur (A) correspondant sensiblement à une épaisseur totale (A) du presseur coulissant (8) présentée entre la face arrière (8.2) et une face avant (8.1) dudit presseur coulissant (8) en appui contre la face intérieure (4.5) du bord de raccordement (4.2).

5. Pare-chocs (4) selon l'une des revendications 3 ou 4, dans lequel la portion latérale (12) comprend au moins une nervure verticale (12.3) s'étendant verticalement depuis la base (12.1) et reliant la paroi d'extension (12.2) à une face latérale (8.3) du presseur coulissant (8).

6. Pare-chocs (4) selon la revendication 5, dans lequel l'au moins une nervure verticale (12.3) comprend trois nervures (12.3) parallèles et sensiblement perpendiculaires à la face latérale (8.3) du presseur coulissant (8).

7. Pare-chocs (4) selon l'une des revendications 1 à 6, dans lequel la portion latérale (12) comprend une largeur (B) s'étendant au-delà du bord de raccordement (4.2) d'au moins 15 mm suivant la direction principale de la paroi de pare-chocs (4).

8. Pare-chocs (4) selon l'une des revendications 1 à 7, dans lequel la portion latérale (12) s'étend sur une longueur (C) correspondant à au moins une moitié d'une étendue longitudinale totale du presseur coulissant (8).

9. Véhicule automobile (2) comprenant :
- deux ailes latérales (6.1) de carrosserie (6) comprenant chacune une portion de retour (6.2) ;
- un pare-chocs (4) comprenant une paroi de pare-chocs (4) formant deux crosses (4.1) se terminant, chacune, par un bord de raccordement (4.2) fixé contre la portion de retour (6.2) de la carrosserie (6) correspondante au moyen de vis et/ou de rivets (14) traversant ladite portion de retour (6.2) et le bord de raccordement (4.2), et s'engageant avec un presseur coulissant (8) disposé contre ledit bord de raccordement (4.2), à l'opposé de la portion de retour de la carrosserie (6.2),
**caractérisé en ce que**
le pare-chocs (4) est selon l'une des revendications 1 à 8.

10. Véhicule automobile (2) selon la revendication 9, dans lequel la portion de retour (6.2) de la carrosserie (6) comprend une section transversale en L épousant la portion latérale (12) du presseur coulissant (8).
